# EUROPEAN PATENT APPLICATION

(11) **EP 4 810 930 A1**
(43) Date of publication of application: **23.09.2026**
(21) Application number: 25889678.6
(22) Date of filing: 29.10.2025
(51) Int. Cl.: G01M 3/16, G01N 27/12, H01M 10/42

(54) **LEAKING CELL DETECTION SYSTEM AND METHOD**

(30) Priority: 07.11.2024 KR 20240157021
(71) Applicant: LG Energy Solution, Ltd., Seoul 07335 (KR)
(72) Inventor: KWON, Youngwoo, Daejeon 34122 (KR)
(74) Representative: Goddar, Heinz J.
(86) International application number: PCT/KR2025/017447
(87) International publication number: WO 2026/101097

(57) **Abstract**

A system of detecting the leak cell according to an embodiment of the present invention may include a gas sensor configured to generate a measurement value that changes according to a concentration of the leaked electrolyte by using a resistance that varies according to the electrolyte leaking from a battery cell, and a control unit configured to calculate a time change amount of the measurement value and Bollinger Bands of the time change amount, generate a leak cell determining graph for the battery cell by listing the time change amount, and an upper limit and a lower limit of the Bollinger Bands in chronological order, and determine whether a corresponding battery cell is the leak cell based on whether a first point where the time change amount breaks through and falls below the lower limit of the Bollinger Bands and a second point where the time change amount breaks through and rises above the upper limit of the Bollinger Bands are included in the leak cell determining graph.

## Description

### BACKGROUND OF THE INVENTION

### (a) Field of the Invention

### Cross-reference to related application(s)

This application claims priority to and the benefit of Korean Patent Application No. 10-2024-0157021 filed with the Korean Intellectual Property Office on November 7, 2024, the entire contents of which are incorporated herein by reference.

The present invention relates to a system and method of detecting a leak cell from among a plurality of battery cells.

### (b) Description of the Related Art

A leak cell refers to a battery cell from which the electrolyte leaks, among a plurality of battery cells included in a battery. Electrolyte leakage in battery cells can be caused primarily by excessive welding, which can lead to various problems. For example, if the electrolyte leaks, the lithium ion movement path is blocked, which reduces the performance of the battery, and the battery life is shortened due to a chemical imbalance inside the battery. In addition, leakage of electrolyte containing flammable substances increases the risk of fire or explosion, and if the electrolyte comes into contact with the internal components of the battery, corrosion may occur, aggravating damage to the cells.

In the conventional art, multiple gas sensors were matched 1:1 to each of the multiple battery cells in a completed battery, to determine whether there was an electrolyte leak. For example, several gas sensors were attached to a board and brought into proximity to each of the multiple battery cells through a cylinder, to check for electrolyte leakage from the top of the battery cells. At this time, upon detecting an organic compound, the gas sensor detect decreases a resistance of the gas sensor, and generates an output value proportional to the resistance, and whether there was an electrolyte leak or not is determined by whether the conversion value calculated based on the output value of the gas sensor exceeds a specific threshold value, or the like. However, in the conventional art, there are problems such as different determination results appearing for respective gas sensors even for the same leak cell, due to the deviation of each gas sensor.

### SUMMARY OF THE INVENTION

### [Technical Problem]

The present invention has an object to provide a method and system capable of accurately detecting a leak cell despite deviations between gas sensors, by using Bollinger Bands.

### [Technical Solution]

A system of detecting a leak cell according to an embodiment of the present invention may include a gas sensor configured to generate a measurement value that changes according to a concentration of the leaked electrolyte by using a resistance that varies according to the electrolyte leaking from a battery cell, and a control unit configured to calculate a time change amount of the measurement value and Bollinger Bands of the time change amount, generate a leak cell determining graph for the battery cell by listing the time change amount, and an upper limit and a lower limit of the Bollinger Bands in chronological order, and determine whether a corresponding battery cell is the leak cell based on whether a first point where the time change amount breaks through and falls below the lower limit of the Bollinger Bands and a second point where the time change amount breaks through and rises above the upper limit of the Bollinger Bands are comprised in the leak cell determining graph.

The gas sensor may be transported to approach the battery cell and then transported to move away from the battery cell by a transport device.

The control unit may include a calculation unit configured to receive the measurement value at each measurement cycle and calculate the time change amount by dividing a difference between a first measurement value generated in a current measurement cycle and a second measurement value generated in an immediately previous cycle by the measurement cycle.

The control unit may include a calculation unit configured to calculate a moving average and a standard deviation of the time change amount, calculate the upper limit of the Bollinger Bands by listing values obtained by adding a certain multiple of the standard deviation to the moving average in chronological order, and calculate the lower limit of the Bollinger Bands by listing values obtained by subtracting a certain multiple of the standard deviation from the moving average in chronological order.

The control unit may include a leak cell determining unit configured to receive movement data of the gas sensor from a storage unit, and extract a gas sensor movement section corresponding to a period in which the gas sensor approaches and then moves away from the battery cell, from the leak cell determining graph, by using a time point at which a movement of the gas sensor starts and a time point at which the movement of the gas sensor stops comprised in the movement data.

The control unit may include the leak cell determining unit configured to determine that the corresponding battery cell is the leak cell, when the first point and the second point are comprised in the gas sensor movement section, and determine that the corresponding battery cell is not the leak cell, when the first point or the second point are not comprised in the gas sensor movement section.

A method of detecting the leak cell according to an embodiment of the present invention may include calculating a time change amount of the measurement value and the Bollinger Bands of the time change amount by using a measurement value received from a gas sensor, by a calculation unit, generating a leak cell determining graph for a specific a battery cell by listing the time change amount and an upper limit and a lower limit of the Bollinger Bands received from the calculation unit in chronological order, by a leak cell determining unit, extracting a gas sensor movement section corresponding to a period in which the gas sensor approaches and then moves away from the specific battery cell, from the leak cell determining graph, by the leak cell determining unit, and determining whether a corresponding battery cell is the leak cell based on whether a first point where the time change amount breaks through and falls below the lower limit of the Bollinger Bands and a second point where the time change amount breaks through and rises above the upper limit of the Bollinger Bands are comprised in the gas sensor movement section, by the leak cell determining unit.

The calculating of the time change amount of the measurement value may include receiving the measurement value at each measurement cycle, and calculating the time change amount by dividing a difference between a first measurement value generated in a current measurement cycle and a second measurement value generated in an immediately previous cycle by the measurement cycle.

The calculating of the Bollinger Bands of the time change amount may include calculating a moving average and a standard deviation of the time change amount, calculating the upper limit of the Bollinger Bands by listing values obtained by adding a certain multiple of the standard deviation to the moving average in chronological order, and calculating the lower limit of the Bollinger Bands by listing values obtained by subtracting a certain multiple of the standard deviation from the moving average in chronological order.

The extracting of the gas sensor movement section may include receiving movement data of the gas sensor from a storage unit, and extracting the gas sensor movement section from the leak cell determining graph, by using a time point at which a movement of the gas sensor starts and a time point at which the movement of the gas sensor stops included in the movement data.

The determining of whether the corresponding battery cell is the leak cell may include determining that the corresponding battery cell is the leak cell, when the first point and the second point are comprised in the gas sensor movement section, and determining that the corresponding battery cell is not the leak cell, when the first point or the second point are not comprised in the gas sensor movement section.

### [Advantageous Effects]

According to an embodiment of the present invention, a leak cell can be accurately determined among a plurality of battery cells included in the battery, despite the deviation between gas sensors.

The advantages achievable by the present disclosure are not limited to those described above, and other effects not explicitly mentioned herein will be clearly understood by those skilled in the art from the following description.

### BRIEF DESCRIPTION OF THE DRAWINGS

FIG. 1 is a block diagram of a system of detecting a leak cell according to an embodiment of the present invention.
FIG. 2 is a drawing for explaining the gas sensor according to an embodiment of the present invention.
FIG. 3 is a graph representing measurement values generated while a gas sensor according to an embodiment of the present invention approaches and then moves away from a battery cell that is not a leak cell, over time.
FIG. 4 is a graph representing measurement values generated while a gas sensor according to an embodiment of the present invention approaches and then moves away from a battery cell that is a leak cell, over time.
FIG. 5 is an example of a graph listing measurement values generated by a gas sensor according to an embodiment of the present invention in chronological order.
FIG. 6 is an example of a leak cell determining graph generated by control unit according to an embodiment of the present invention.
FIG. 7 is a flowchart of a method of detecting a leak cell according to an embodiment of the present invention.

### DETAILED DESCRIPTION OF THE EMBODIMENTS

In describing exemplary embodiments of the present specification, when it is determined that a detailed description of the well-known art associated with the present invention may obscure the gist of the present invention, it will be omitted. In addition, the accompanying drawings are provided only in order to allow embodiments disclosed in the present specification to be easily understood and are not to be interpreted as limiting the spirit disclosed in the present specification, and it is to be understood that the present invention includes all modifications, equivalents, and substitutions without departing from the scope and spirit of the present disclosure.

Terms including an ordinal number, such as first, second, etc., may be used to describe various elements, but the elements are not limited by the terms. These terms are only used to differentiate one constituent element from another.

It should be understood that, when it is described that an element is "coupled" or "connected" to another element, the element may be "directly coupled" or "directly connected" to the mentioned another element, or may be "coupled" or "connected" to the other element through a third element. In contrast, it should be understood that, when it is described that an element is "directly coupled" or "directly connected" to another element, no element is present between the element and the other element.

In the present application, it should be understood that the term "include", "comprise", "have", or "configure" indicates that a feature, a number, a step, an operation, a constituent element, a part, or a combination thereof described in the specification is present, but does not exclude a possibility of presence or addition of one or more other features, numbers, steps, operations, constituent elements, parts, or combinations, in advance.

Hereinafter, the present invention will be described in detail.

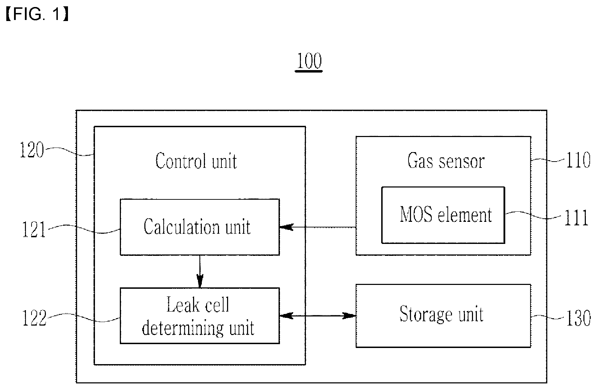

FIG. 1 is a block diagram of a system 100 of detecting a leak cell according to an embodiment of the present invention.

Referring to FIG. 1, a system 100 of detecting the leak cell according to an embodiment of the present invention may include a gas sensor 110, a control unit 120 and a storage unit 130.

The gas sensor 110 may generate a measurement value that changes according to a concentration of the leaked electrolyte by using a resistance that varies according to the electrolyte leaking from a battery cell. Here, the measurement value is data created by detecting the concentration of electrolyte leaking from the battery cell, which is generated by the gas sensor 110 and inversely proportional to the concentration of electrolyte.

For example, the gas sensor 110 may include a metal oxide semiconductor (MOS) element 111. The gas generated by the leaked electrolyte is adsorbed on a surface of the MOS element 111 of the gas sensor 110 to cause an oxidation or reduction reaction on the surface of the MOS element 111, and accordingly, a resistance value of the MOS element 111 changes. At this time, when the gas (e.g., a volatility organic compound or corrosive gas of the electrolyte) that has occurred in the leaked electrolyte is adsorbed in the MOS element 111, the conductivity of the MOS element 111 is improved to promote the movement of electrons, thereby decreasing the resistance of the MOS element 111. That is, as the concentration of the leaked electrolyte increases, the concentration of the gas generated in the leaked electrolyte also increases, so the resistance value of the MOS element 111 decreases. The gas sensor 110 may measure the resistance value of the MOS element 111. Hereinafter, the resistance value of the MOS element 111 measured by the gas sensor 110 is explained as a measurement value indicating the electrolyte leaked from the specific battery cell (hereinafter, leakage electrolyte concentration).

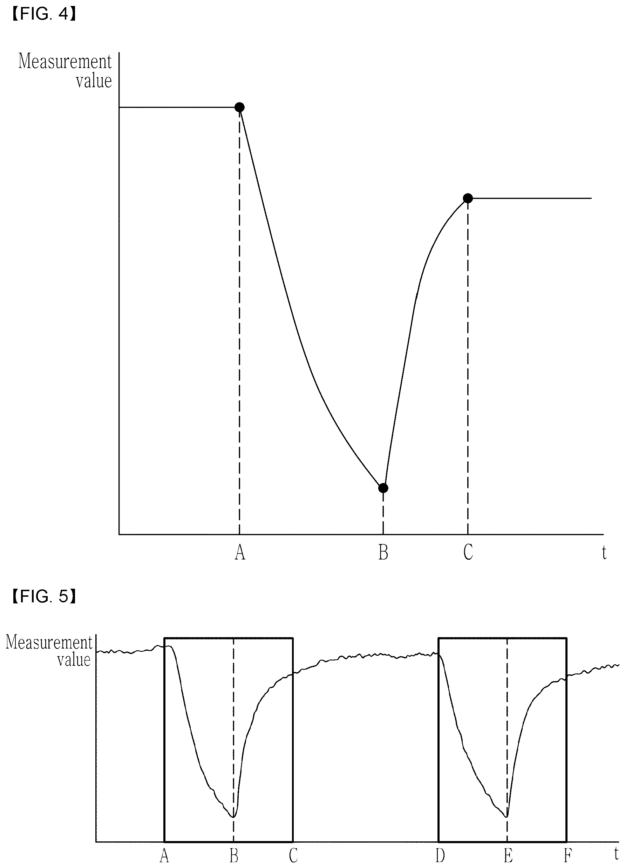

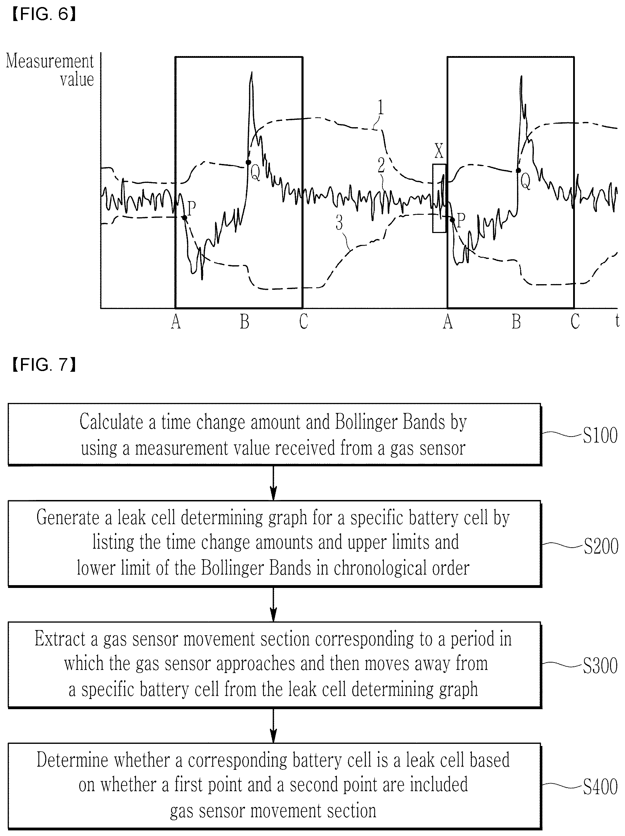

The control unit 120 may receive the measurement value for the concentration of the electrolyte leaked from the specific battery cell from the gas sensor 110. The control unit 120 may calculate a time change amount of the measurement value and Bollinger Bands of the time change amount. The control unit 120 may determine whether a corresponding battery cell is the leak cell, based on a relationship between the time change amount and the Bollinger Bands. Depending on the embodiment, the control unit 120 may include a calculation unit 121 and the leak cell determining unit 122. The component of the control unit 120 according to an embodiment of the present invention will be hereinafter described in further detail with reference to FIG. 5 and FIG. 6.

The storage unit 130 may store movement data of the gas sensor 110 and the leak cell determination result to be described later.

Depending on the embodiment, the system 100 of detecting the leak cell may include a display (not shown in the drawings). The display may receive the leak cell determining graph and the leak cell determination result including the time change amount and the Bollinger Bands from the control unit 120, and may provide the received leak cell determining graph and the leak cell determination result to the user.

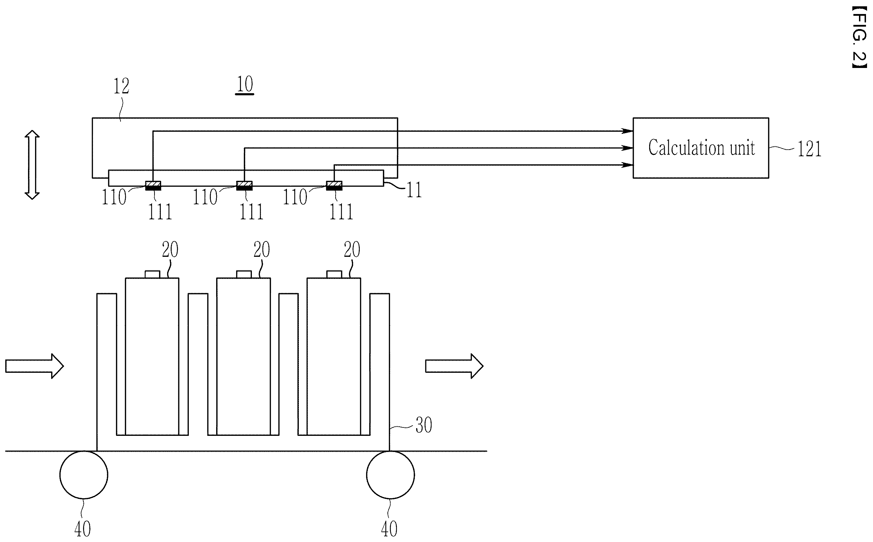

FIG. 2 is a drawing for explaining the gas sensor 110 according to an embodiment of the present invention.

Referring to FIG. 2, the system 100 of detecting the leak cell according to an embodiment of the present invention may include a plurality of gas sensors 110. The plurality of gas sensors 110 may be transported to approach and then move away from a plurality of battery cells 20 by a transport device 10.

At this time, the transport device 10 may be controlled by the control unit 120 or an external device (not shown in the drawings) of the system 100 of detecting the leak cell, and information on the motion of the plurality of gas sensors 110 by the transport device 10 may be transmitted to and stored in the storage unit 130 of the system 100 of detecting the leak cell as the movement data. Here, the movement data may include the information on a moving direction of the gas sensor 110, a time point of starting the movement, and a time point of stopping the movement.

For example, each of the plurality of battery cells 20 corresponding to the leak cell detection target may be transported by a transport roller 40 while being accommodated in a cell tray 30. At this time, the cell tray 30 may move under the transport device 10, and when the cell tray 30 reaches a particular position, and the transport roller 40 may temporarily stop the operation. That is, the transport roller 40 may be controlled so that the cell tray 30 is temporarily stopped at the particular position. At this time, the particular position where the cell tray 30 temporarily stops may be a position where each of the plurality of battery cells 20 is matched 1:1 with each of the plurality of gas sensors 110. When the cell tray 30 reaches the particular position, the transport device 10 may perform an operation of lowering and then raising the plurality of gas sensors 110. Accordingly, each of the plurality of gas sensors 110 may approach and then move away from each of the plurality of battery cells 20.

FIG. 2 illustrates that the transport device 10 includes a board 11 on which the plurality of gas sensors 110 are installed and disposed, and a transport member 12 (e.g., a cylinder or the like) transporting the board 11 up and down. However, the configuration of the transport device 10 according to the present invention is not limited thereto, and the configuration and operation manner of the transport device 10 can be freely changed depending on embodiments.

Referring to FIG. 2, each of the plurality of gas sensors 110 may generate the each of a plurality of measurement values, while approaching and then moving away from each of the plurality of battery cells 20. Each of the plurality of gas sensors 110 may transmit each of the plurality of measurement values generated while approaching and then moving away from each of the plurality of battery cells 20 to the calculation unit 121. At this time, the measurement value generated by the gas sensor 110 may be inversely proportional to the concentration of electrolyte detected by the gas sensor 110 while the gas sensor 110 approaches and then moves away from the battery cell 20.

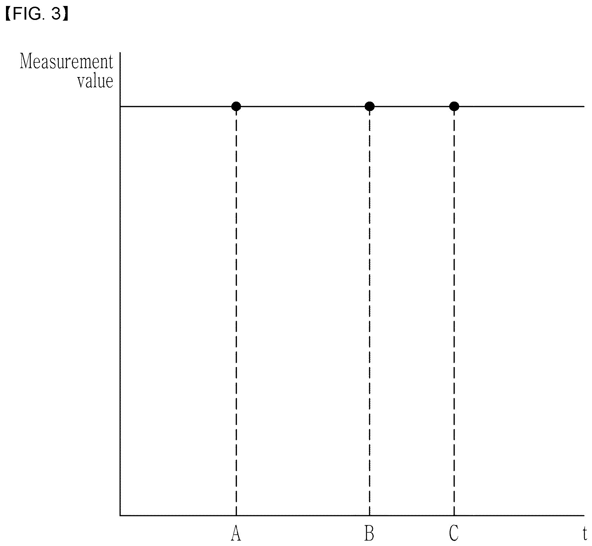

FIG. 3 is a graph representing the measurement value generated while the gas sensor 110 according to an embodiment of the present invention approaches and then moves away from a battery cell that is not a leak cell, over time. FIG. 4 is a graph representing the measurement value generated while the gas sensor 110 according to an embodiment of the present invention approaches and then moves away from a battery cell that is a leak cell.

Referring to FIG. 3, while the gas sensor 110 approaches and then moves away from a battery cell that is not a leak cell, the change of the measurement value generated by the gas sensor 110 can be seen.

A section from A to B of FIG. 3 corresponds to a section during which the gas sensor 110 approaches the battery cell, and a section from B to C of FIG. 3 corresponds to a section during which the gas sensor 110 moves away from the battery cell.

That is, when the battery cell is not the leak cell, the concentration of electrolyte detected by the gas sensor 110 does not change while the gas sensor 110 approaches and then moves away from the battery cell, so the measurement value generated by the gas sensor 110 does not show any change.

Referring to FIG. 4, while the gas sensor 110 approaches and then moves away from a battery cell that is a leak cell, the change of the measurement value generated by the gas sensor 110 can be seen.

The section from A to B of FIG. 4 corresponds to a section during which the gas sensor 110 approaches the leak cell. In this A → B section, the concentration of electrolyte detected by the gas sensor 110 increases as the gas sensor 110 becomes closer to the leak cell, so the measurement value generated by the gas sensor 110 decreases.

The section from B to C of FIG. 4 corresponds to a section during which the gas sensor 110 moves away from the leak cell. In this B → C section, the concentration of electrolyte detected by the gas sensor 110 decreases as the gas sensor 110 moves away from the leak cell, so the measurement value generated by the gas sensor 110 increases.

That is, when the battery cell is the leak cell, during the period in which the gas sensor 110 approaches and then moves away from the battery cell, the measurement value measured by the gas sensor 110 rapidly decreases and then rapidly increases.

FIG. 5 is an example of a graph listing measurement values generated by the gas sensor 110 according to an embodiment of the present invention in chronological order. FIG. 6 is an example of a leak cell determining graph generated by the control unit 120 according to an embodiment of the present invention.

Referring to FIG. 1, the control unit 120 according to an embodiment of the present invention may include the calculation unit 121 and the leak cell determining unit 122.

The calculation unit 121 may receive the measurement value for the concentration of electrolyte leaking from the leaking battery cell from the gas sensor 110 at each measurement cycle. Here, the measurement cycle refers to a cycle by which the gas sensor 110 detects the electrolyte leaking from the battery cell to generate the measurement value that is inversely proportional to the concentration of electrolyte. At this time, the calculation unit 121 may receive the measurement value for each of the plurality of battery cells corresponding to the leak cell detection target.

The calculation unit 121 may calculate the time change amount of the measurement value. Here, the time change amount means a change rate of the measurement value over time, and means a change amount of the measurement value per unit time. Depending on the embodiment, unit time of the time change amount may be seconds (sec). At this time, the calculation unit 121 may calculate the time change amount for each of the plurality of battery cells corresponding to the leak cell detection target.

Depending on the embodiment, the calculation unit 121 may calculate the time change amount by dividing a difference between a first measurement value generated in a current measurement cycle and a second measurement value generated in an immediately previous measurement cycle by the measurement cycle. For example, when the gas sensor 110 generates the measurement value by a measurement cycle interval of 10 seconds, the calculation unit 121 may calculate the time change amount by dividing the difference between the first measurement value generated in the current measurement cycle and the second measurement value generated in the immediately previous measurement cycle by 10 seconds.

The calculation unit 121 may calculate the Bollinger Bands by using a time change amount 2. Here, the Bollinger Bands are a data analysis tool visualizing volatility in data, and may be calculated based on a moving average and a standard deviation of the data. The Bollinger Bands may include an upper limit 1 and a lower limit 3. A wider gap between the upper limit 1 and the lower limit 3 of the Bollinger Bands means greater volatility in data, while a narrower gap between the upper limit 1 and the lower limit 3 means narrower volatility in data. At this time, the calculation unit 121 may calculate the Bollinger Bands for each of the plurality of battery cells corresponding to the leak cell detection target.

Depending on the embodiment, the calculation unit 121 may calculate the moving average and the standard deviation of the time change amount 2. For example, the calculation unit 121 may calculate an average of the time change amounts in a predetermined quantity during the measurement cycle, to calculate the moving average. The calculation unit 121 may calculate the standard deviation based on a difference between the moving average and the time change amount. On the other hand, conventionally known various methods are applicable to a method of calculating the moving average and the standard deviation by the calculation unit 121.

Depending on the embodiment, the calculation unit 121 may calculate the Bollinger Bands by using the moving average and the standard deviation. For example, the calculation unit 121 may calculate the upper limit 1 by listing values obtained by adding a certain multiple of the standard deviation to the moving average in chronological order, and may calculate the lower limit 3 by listing values obtained by subtracting a certain multiple of the standard deviation from the moving average in chronological order.

The calculation unit 121 may transmit the time change amount and the Bollinger Bands to the leak cell determining unit 122. At this time, the time change amount and the Bollinger Bands may be calculated for each of the plurality of battery cells corresponding to the leak cell detection target, and transmitted to the leak cell determining unit 122.

Hereinafter, the process of calculating the time change amount 2 and the Bollinger Bands by the calculation unit 121 according to an embodiment of the present invention will be described with reference to FIG. 5 and FIG. 6.

Referring to FIG. 5, an example of the measurement value generated from the corresponding gas sensor 110 can be confirmed when one gas sensor 110 among the plurality of gas sensors 110 performs an operation of approaching and moving away from one battery cell corresponding to the leak cell among the plurality of battery cells twice, and referring to FIG. 6, an example of the time change amount 2 and the Bollinger Bands calculated by the calculation unit 121 in the above case can be confirmed.

First, the calculation unit 121 may receive the measurement value for one battery cell corresponding to the leak cell from the gas sensor 110. For example, as shown in FIG. 5, the calculation unit 121 may receive a measurement value that remains constantly in a 0 → A section, rapidly decreases in an A → B section, rapidly increases in a B → C section, remains constant again in a C → D section, rapidly decreases again in a D → E section, and rapidly increases again in an E → F section.

Afterwards, the calculation unit 121 may calculate the time change amount 2 by using the measurement value of FIG. 5. For example, as shown in FIG. 6, the calculation unit 121 may calculate the time change amount 2 close to a value 0 in the 0 → A section, calculate the time change amount 2 in a negative value in the A → B section, and calculate the time change amount 2 in a positive value in the B → C section. In addition, the calculation unit 121 may calculate the time change amount 2 close to the value 0 again in the C → D section, calculate the time change amount 2 in a negative value again in the D → E section, and calculate the time change amount 2 in a positive value in the E → F section. That is, referring to FIG. 5 and FIG. 6, the calculation unit 121 calculates the time change amount 2 in a negative value in the A → B and D → E sections where the measurement value rapidly decreases, and calculates the time change amount 2 in a positive value in the B → C and E → F sections where the measurement value rapidly increases.

Afterwards, the calculation unit 121 may calculate the upper limit 1 and the lower limit 3 of the Bollinger Bands by using the time change amount 2. For example, as shown in FIG. 6, in the 0 → A section, since the volatility of the time change amount 2 is relatively small, the calculation unit 121 may calculate Bollinger Bands having a relatively narrow gap between the upper limit 1 and the lower limit 3, and in the A → B → C section, since the time change amount 2 rapidly decreases and increases, that is, since the volatility of the time change amount 2 is relatively large, the calculation unit 121 may calculate the Bollinger Bands having a relatively wide gap between the upper limit 1 and the lower limit 3. In addition, in the C → D section, since the volatility of the time change amount 2 decreases, the calculation unit 121 may calculate Bollinger Bands in which the gap between the upper limit 1 and the lower limit 3 narrows, and in the D → E → F section, since the volatility of the time change amount 2 increases again, the calculation unit 121 may calculate the Bollinger Bands in which the gap between the upper limit 1 and the lower limit 3 is widened again.

The leak cell determining unit 122 may receive the time change amount 2 and the Bollinger Bands at each measurement cycle from the calculation unit 121. At this time, the leak cell determining unit 122 may receive the each of a plurality of time change amounts 2 and a plurality of Bollinger Bands calculated for each of the plurality of battery cells corresponding to the leak cell detection target.

The leak cell determining unit 122 may generate the leak cell determining graph by listing the time change amount 2 and the upper limit 1 and the lower limit 3 of the Bollinger Bands in chronological order. Here, the leak cell determining graph generated by the leak cell determining unit 122 may have time as the x-axis and the time change amount as the y-axis. For example, the leak cell determining unit 122 may generate the leak cell determining graph of FIG. 6 by listing the time change amount 2 and the upper limit 1 and the lower limit 3 of the Bollinger Bands, which are calculated by using the measurement value of FIG. 5 in chronological order. At this time, the leak cell determining unit 122 may generate the each of a plurality of leak cell determining graphs for each of the plurality of battery cells corresponding to the leak cell detection target.

The leak cell determining unit 122 may determine whether the corresponding battery cell is the leak cell, by using a relationship between the time change amount 2 and the Bollinger Bands included in the leak cell determining graph for the specific battery cell. At this time, the leak cell determining unit 122 may determine whether each of the plurality of battery cells is the leak cell, by analyzing each of the plurality of leak cell determining graphs.

Referring to FIG. 5 and FIG. 6, the section from A to B of the leak cell determining graph corresponds to a section during which the gas sensor 110 approaches the leak cell. In this A → B section, the measurement value generated by the gas sensor 110 rapidly decreases as the gas sensor 110 approaches the leak cell, so a section in which the time change amount 2 becomes lower than the lower limit 3 of the Bollinger Bands occurs. At this time, a first point P where the time change amount 2 breaks through and falls below the lower limit 3 of the Bollinger Bands occurs.

The section from B to C of the leak cell determining graph corresponds to a section during which the gas sensor 110 moves away from the leak cell. In this B → C section, the measurement value generated by the gas sensor 110 rapidly increases as the gas sensor 110 moves away from the leak cell, so a section in which the time change amount 2 becomes higher than the upper limit 1 of the Bollinger Bands occurs. At this time, a second point Q where the time change amount 2 breaks through and rises above the upper limit 1 of the Bollinger Bands occurs. This is also the case in the D → E → F sections of the leak cell determining graph.

That is, when the battery cell is the leak cell, during the period in which the gas sensor 110 approaches and then moves away from the battery cell, a section in which the time change amount 2 is lower than the lower limit 3 of the Bollinger Bands and a section in which the time change amount 2 is higher than the upper limit 1 of the Bollinger Bands occur in the leak cell determining graph. Accordingly, the first point P where the time change amount 2 breaks through and falls below the lower limit 3 of the Bollinger Bands and the second point Q where the time change amount 2 breaks through and rises above the upper limit 1 of the Bollinger Bands occur in the leak cell determining graph.

Depending on the embodiment, on the leak cell determining graph generated for the specific battery cell, the first point P where the time change amount 2 breaks through and falls below the lower limit 3 of the Bollinger Bands and the second point Q where the time change amount 2 breaks through and rises above the upper limit 1 of the Bollinger Bands occur, the leak cell determining unit 122 may determine the corresponding battery cell as the leak cell.

The time change amount 2 of the measurement value and the Bollinger Bands generated by the gas sensor 110 represents the change amount of the measurement value of the gas sensor 110 due to the leak cell in a state in which the characteristics of the gas sensor 110 and the deviation of the gas sensor 110 itself due to an environmental difference is reflected. Accordingly, when the deviation of a gas sensor 110 is constant, the influence of the deviation of that gas sensor 110 on the time change amount 2 of the measurement value and the Bollinger Bands of that gas sensor 110 is minimized, so that when the leak cell is detected by using the time change amount 2 and the Bollinger Bands, even if the deviation between the gas sensors 110 exists, whether the specific battery cell is the leak cell can be accurately determined.

In addition, even if temporary errors occur at some of the gas sensors 110, the Bollinger Bands analyze data based on the moving average and the standard deviation during a predetermined period of time rather than instantaneous fluctuations, so the errors caused by temporary noise can be filtered out.

The leak cell determining unit 122 may extract a movement section of the gas sensor 110 corresponding to the period in which the gas sensor 110 approaches and then moves away from the battery cell from the leak cell determining graph for the specific battery cell. At this time, the leak cell determining unit 122 may receive the movement data for the motion of the gas sensor 110 from the storage unit 130. Here, the movement data may include the information on a moving direction of the gas sensor 110, a time point of starting the movement, and a time point of stopping the movement. At this time, the leak cell determining unit 122 may extract the movement section of the gas sensor 110, for each of the plurality of leak cell determining graphs for each of the plurality of battery cells.

Depending on the embodiment, the leak cell determining unit 122 may extract the movement section of the gas sensor 110 from the leak cell determining graph by using a time point at which the movement of the gas sensor 110 included in the movement data starts and a time point at which the movement of the gas sensor 110 stops.

The reason why the leak cell determining unit 122 extracts the movement section of the gas sensor 110 is that, as shown in a box X of FIG. 6, the first point and the second point may occur in the leak cell determining graph even when the time change amount does not rapidly increase or rapidly decrease by the movement of the gas sensor 110. This occurs because the gap between the upper limit 1 and the lower limit 3 of the Bollinger Bands that was widened by the movement of the gas sensor 110 before being stopped narrows again as the movement of the gas sensor 110 is stopped, so that the gap between the upper limit 1 and the lower limit 3 of the Bollinger Bands is narrowed. That is, in addition to the case due to the movement of the gas sensor 110, this may be because the relationship between the time change amount and the Bollinger Bands may change in the process of the gap of the upper limit 1 and the lower limit 3 of the Bollinger Bands being narrowed again while the movement of the gas sensor 110 is stopped. That is, when a section obtained while the gas sensor 110 moves is extracted from the leak cell determining graph, and whether the first point and the second point have occurred is determined only on that section, the case where the first point and the second point occur while the movement of the gas sensor 110 is stopped can be excluded.

The leak cell determining unit 122 may determine whether the first and second points have occurred with respect to the movement section of the gas sensor 110, to determine whether the corresponding battery cell is the leak cell.

FIG. 7 is a flowchart of a method of detecting the leak cell according to an embodiment of the present invention.

Referring to FIG. 7, a method of detecting the leak cell according to an embodiment of the present invention may include a step S100 of calculating the time change amount and the Bollinger Bands, a graph generation step S200, a section extracting stepS300, and a leak cell determining step S400.

At the step S100 of calculating the time change amount and the Bollinger Bands, the calculation unit 121 may calculate the time change amount and the Bollinger Bands by using the measurement value received from the gas sensor 110. Here, the measurement value is data created by detecting the concentration of electrolyte leaking from the battery cell, which is generated by the gas sensor 110 and inversely proportional to the concentration of electrolyte.

Depending on the embodiment, the step S100 of calculating the time change amount and the Bollinger Bands may include a step of receiving the measurement value at each measurement cycle and a step of calculating the time change amount by dividing the difference between the first measurement value generated in the current measurement cycle and the second measurement value generated in the immediately previous cycle by the measurement cycle.

Depending on the embodiment, the step S100 of calculating the time change amount and the Bollinger Bands may include a step of calculating the moving average and the standard deviation of the time change amount, a step of calculating the upper limit of the Bollinger Bands by listing the values obtained by adding a certain multiple of the standard deviation to the moving average in chronological order, and a step of calculating the lower limit of the Bollinger Bands by listing the values obtained by subtracting a certain multiple of the standard deviation from the moving average in chronological order.

In the graph generation step S200, the leak cell determining unit 122 may generate the leak cell determining graph for the specific battery cell by listing the time change amount, the upper limit and the lower limit of the Bollinger Bands, which are received from the calculation unit 121 in chronological order.

In the section extracting step S300, the leak cell determining unit 122 may extract the movement section of the gas sensor 110 corresponding to the period in which the gas sensor 110 approaches and then moves away from the specific battery cell, from the leak cell determining graph.

Depending on the embodiment, the section extracting step S300 may include a step of receiving the movement data of the gas sensor 110 from the storage unit 130 and extract the movement section of the gas sensor 110 from the leak cell determining graph by using a time point at which the movement of the gas sensor 110 starts and a time point at which the movement of the gas sensor 110 stops, which are included in the movement data.

At the leak cell determining step S400, the leak cell determining unit 122 may determine whether the corresponding battery cell is the leak cell based on whether the first point P where the time change amount breaks through and falls below the lower limit of the Bollinger Bands and the second point Q where the time change amount breaks through and rises above the upper limit of the Bollinger Bands are included in the movement section of the gas sensor 110.

Depending on the embodiment, the leak cell determining step S400 may include a step of determine that the corresponding battery cell is the leak cell, when the first point P and the second point Q are included in the movement section of the gas sensor 110 and a step of determining that the corresponding battery cell is not the leak cell, when the first point P or the second point Q are not included in the movement section of the gas sensor 110.

On the other hand, the above-described method may be written as a program executable by a computer, and may be implemented by a general-purpose digital computer that operates the program by using a computer-readable recording medium. The computer-readable recording medium may include the magnetic storage media such as ROM, RAM, USBs, floppy disks, or hard disks, or optical readable media such as CD-ROMs or DVDs.

The scope of the present invention is determined not by the above description, but by the following claims, and all changes or modifications within the spirit, scope, and equivalents of claims should be construed as being included in the scope of the present disclosure.

## Claims

1. A system of detecting a leak cell, comprising:
a gas sensor configured to generate a measurement value that changes according to a concentration of the leaked electrolyte by using a resistance that varies according to the electrolyte leaking from a battery cell; and
a control unit configured to calculate a time change amount of the measurement value and Bollinger Bands of the time change amount, generate a leak cell determining graph for the battery cell by listing the time change amount, and an upper limit and a lower limit of the Bollinger Bands in chronological order, and determine whether a corresponding battery cell is the leak cell based on whether a first point where the time change amount breaks through and falls below the lower limit of the Bollinger Bands and a second point where the time change amount breaks through and rises above the upper limit of the Bollinger Bands are comprised in the leak cell determining graph.

2. The system of claim 1, wherein the gas sensor is transported to approach the battery cell and then transported to move away from the battery cell by a transport device.

3. The system of claim 1, wherein the control unit comprises a calculation unit configured to receive the measurement value at each measurement cycle and calculate the time change amount by dividing a difference between a first measurement value generated in a current measurement cycle and a second measurement value generated in an immediately previous cycle by the measurement cycle.

4. The system of claim 1, wherein the control unit comprises a calculation unit configured to calculate a moving average and a standard deviation of the time change amount, calculate the upper limit of the Bollinger Bands by listing values obtained by adding a certain multiple of the standard deviation to the moving average in chronological order, and calculate the lower limit of the Bollinger Bands by listing values obtained by subtracting a certain multiple of the standard deviation from the moving average in chronological order.

5. The system of claim 1, wherein the control unit comprises a leak cell determining unit configured to receive movement data of the gas sensor from a storage unit, and extract a gas sensor movement section corresponding to a period in which the gas sensor approaches and then moves away from the battery cell, from the leak cell determining graph, by using a time point at which a movement of the gas sensor starts and a time point at which the movement of the gas sensor stops comprised in the movement data.

6. The system of claim 5, wherein the control unit comprises the leak cell determining unit configured to determine that the corresponding battery cell is the leak cell, when the first point and the second point are comprised in the gas sensor movement section, and determine that the corresponding battery cell is not the leak cell, when the first point or the second point are not comprised in the gas sensor movement section.

7. A method of detecting the leak cell, comprising:
calculating a time change amount of the measurement value and the Bollinger Bands of the time change amount by using a measurement value received from a gas sensor, by a calculation unit;
generating a leak cell determining graph for a specific battery cell by listing the time change amount and an upper limit and a lower limit of the Bollinger Bands received from the calculation unit in chronological order, by a leak cell determining unit;
extracting a gas sensor movement section corresponding to a period in which the gas sensor approaches and then moves away from the specific battery cell, from the leak cell determining graph, by the leak cell determining unit; and
determining whether a corresponding battery cell is the leak cell based on whether a first point where the time change amount breaks through and falls below the lower limit of the Bollinger Bands and a second point where the time change amount breaks through and rises above the upper limit of the Bollinger Bands are comprised in the gas sensor movement section, by the leak cell determining unit.

8. The method of claim 7, wherein the calculating of the time change amount of the measurement value comprises:
receiving the measurement value at each measurement cycle; and
calculating the time change amount by dividing a difference between a first measurement value generated in a current measurement cycle and a second measurement value generated in an immediately previous cycle by the measurement cycle.

9. The method of claim 7, wherein the calculating of the Bollinger Bands of the time change amount comprises:
calculating a moving average and a standard deviation of the time change amount;
calculating the upper limit of the Bollinger Bands by listing values obtained by adding a certain multiple of the standard deviation to the moving average in chronological order; and
calculating the lower limit of the Bollinger Bands by listing values obtained by subtracting a certain multiple of the standard deviation from the moving average in chronological order.

10. The method of claim 7, wherein the extracting of the gas sensor movement section comprises:
receiving movement data of the gas sensor from a storage unit; and
extracting the gas sensor movement section from the leak cell determining graph, by using a time point at which a movement of the gas sensor starts and a time point at which the movement of the gas sensor stops comprised in the movement data.

11. The method of claim 7, wherein the determining of whether the corresponding battery cell is the leak cell comprises:
determining that the corresponding battery cell is the leak cell, when the first point and the second point are comprised in the gas sensor movement section; and
determining that the corresponding battery cell is not the leak cell, when the first point or the second point are not comprised in the gas sensor movement section.
